**Europäisches Patentamt**

**European Patent Office**

**Office européen des brevets**

(19)

(11) Veröffentlichungsnummer: **0 039 944**
**B1**

(12)

# EUROPÄISCHE PATENTSCHRIFT

(45) Veröffentlichungstag der Patentschrift:
**22.08.84**

(21) Anmeldenummer: **81103604.5**

(22) Anmeldetag: **11.05.81**

(51) Int. Cl.³: **G 03 B 3/10,** G 03 B 13/20,
G 02 B 7/11

(54) **Spiegelreflexkamera mit optoelektronischem Entfernungsmesser.**

(30) Priorität: **14.05.80 DE 3018588**

(43) Veröffentlichungstag der Anmeldung:
**18.11.81 Patentblatt 81/46**

(45) Bekanntmachung des Hinweises auf die Patenterteilung:
**22.08.84 Patentblatt 84/34**

(84) Benannte Vertragsstaaten:
**BE FR GB IT NL**

(56) Entgegenhaltungen:
**DE - A - 2 609 877**
**DE - A - 2 710 695**
**DE - A - 2 813 913**
**DE - A - 2 822 027**
**DE - A - 2 838 647**
**US - A - 4 083 056**

(73) Patentinhaber: **SIEMENS AKTIENGESELLSCHAFT,**
**Berlin und München Wittelsbacherplatz 2,**
**D-8000 München 2 (DE)**

(72) Erfinder: **Grassl, Hans-Peter, Dipl.-Phys., Obere**
**Bahnhofsstrasse 12, D-8011 Zorneding (DE)**
Erfinder: **Kleinschmidt, Peter, Dipl.-Phys.,**
**Klagenfurterstrasse 12, D-8000 München 90 (DE)**
Erfinder: **Herbst, Heiner, Dr.-Ing., Anechostrasse 82,**
**D-8000 München 82 (DE)**
Erfinder: **Pfleiderer, Hans-Jörg, Dr.-Ing.,**
**Franz-Krinninger Weg 23, D-8011 Zorneding (DE)**

## Beschreibung

Die Erfindung bezieht sich auf eine fotografische oder elektronische Kamera mit einem optoelektronischen Entfernungsmesser nach dem Oberbegriff des Patentanspruchs 1.

Eine fotografische Kamera dieser Art, bei der die beiden von dem in seiner Entfernung zu bestimmenden Gegenstand benötigten Abbildungen über die Teilpupillen des Kameraobjektivs erhalten werden, ist aus der DE-A-2 813 914 bekannt. Anordnungen zur optoelektronischen Entfernungsmessung mit zwei linearen Bildsensoren sind darüber hinaus in der DE-A-2 813 913 und den DE-A-2 838 647, 2 936 491 und 2 936 535 beschrieben. Hierbei werden die Vorrichtungen zur Ableitung der beiden Abbildungen jeweils ganz allgemein als optische Einrichtungen bezeichnet, die z.B. aus zwei Teilpupillen eines Objektivs oder aus zwei die gleichen Funktionen erfüllenden getrennten Objektiven bestehen können.

Wie aus den genannten Druckschriften hervorgeht, bestehen die Sensorelemente aus Fotodioden, MIS-Kondensatoren, oder aus Fotodioden, denen jeweils MIS-Kondensatoren zugeordnet sind. Innerhalb einzelner Zeitintervalle, die auch als Integrationszeiten bezeichnet werden, sammeln sich in den Sensorelementen jeweils optisch erzeugte Ladungsträger an, aus denen dann die Sensorsignale abgeleitet werden. Bei den Anordnungen nach den DE-A-2 813 913 und 2 813 914 erfolgt eine analoge Verarbeitung der Sensorsignale, während sich die Anordnungen nach den weiterhin genannten älteren Patentanmeldungen davon insofern unterscheiden, als die Sensorsignale vor ihrer weiteren Verarbeitung zunächst digitalisiert werden.

Aus der DE-A-2 710 695 ist eine Spiegelreflexkamera bekannt, bei der der Klappspiegel zwei Ausnehmungen aufweist, hinter denen ein Umlenkspiegel angeordnet ist, der die beiden Teilstrahlenbündel auf im Kamerakörper angeordnete Bildsensoren lenkt. Der Umlenkspiegel muss dabei beweglich angebracht sein, da er sonst bei hochgeklapptem Klappspiegel den Strahlengang stört. Dies ist aufwendig und störanfällig, auch leidet darunter die erforderliche genaue Justierung des Bildes auf den Bildsensoren.

Der Erfindung liegt die Aufgabe zugrunde, eine mit einem optoelektronischen Entfernungsmesser ausgerüstete Spiegelreflexkamera anzugeben, bei der die für den Entfernungsmesser erforderlichen optischen Komponenten so ausgebildet sind, dass sie den Strahlengang der Kamera weder im Sucherteil noch zwischen dem Objektiv und der Bildebene beeinträchtigen. Diese Aufgabe wird durch die im Patentanspruch 1 angeführten Merkmale gelöst.

Der mit der Erfindung erzielbare Vorteil besteht insbesondere darin, dass der Einbau des optoelektronischen Entfernungsmessers nur eine geringfügige Abänderung des konventionellen Aufbaus einer Spiegelreflexkamera bedingt.

Die Ansprüche 2 bis 7 geben bevorzugte Ausgestaltungen und Weiterbildungen der Erfindung an.

Die Erfindung wird nachfolgend anhand der Zeichnung näher erläutert. Dabei zeigt:

Fig. 1 die schematische Darstellung einer nach der Erfindung ausgebildeten Spiegelreflexkamera und

Fig. 2 den Strahlengang der Kamera nach Fig. 1.

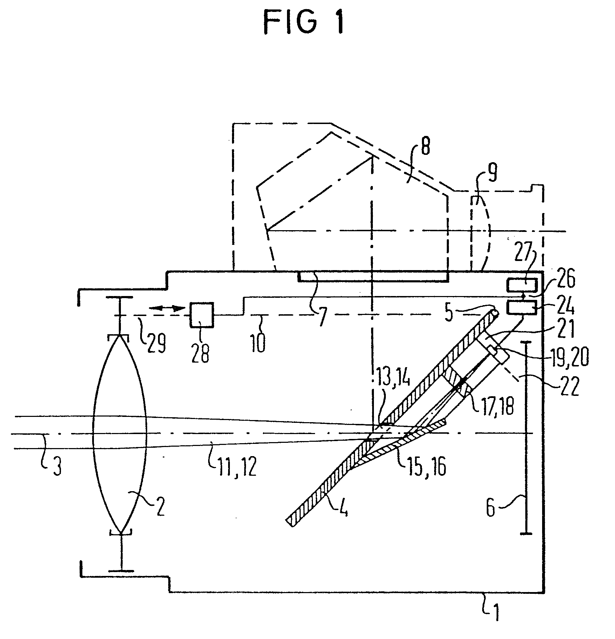

In Fig. 1 ist eine Spiegelreflexkamera mit einem Gehäuse 1 und einem Objektiv 2 schematisch dargestellt. Ein durch das Objektiv 2 eintretendes, von einem zu fotografierenden Gegenstand abgeleitetes Strahlbündel ist dabei durch den mit der optischen Achse 3 zusammenfallenden Strahl angedeutet. Ein Klappspiegel 4, der um eine Achse 5 drehbar gelagert ist, kann in die eingezeichnete Lage gebracht werden, in der er sich im Strahlengang zwischen dem Objektiv 2 und einer Bildebene 6 befindet, in der z.B. ein fotografischer Film oder bei einer elektronischen Kamera ein zweidimensionaler Bildsensor vorgesehen sind. Dabei lenkt er das eintretende Strahlenbündel 3 in Richtung auf eine Suchereinstellscheibe (Mattscheibe) 7, um. Diese befindet sich in einer zu der Bildebene 6 äquivalenten Ebene, so dass ein Motivbild auf sie scharf abgebildet wird. Das Motivbild kann weiterhin über ein sogenanntes Pentaprisma 8 auf ein Einblickokular 9 reflektiert werden, in dem es dann aufrecht und seitenrichtig erscheint. Nach der Motivsuche und dem Einstellen des Abstandes des Objektivs 2 von der Bildebene 6 auf einen solchen Wert, dass der aufzunehmende Gegenstand scharf auf der Bildebene 6 abgebildet wird, wird dann der Klappspiegel in die gestrichelt angedeutete Position 10 gebracht, so dass das Strahlenbündel 3 zur Bildebene 6 gelangt und den fotografischen Film belichtet bzw. optoelektronisch abgetastet wird.

Die zur Entfernungsmessung benötigten, durch zwei Teilpupillen P1, P2 des Objektivs 2 eintretenden Teilstrahlenbündel 11, 12, die sich in Fig. 1 decken, da sie vor bzw. hinter der durch die optische Achse gehenden Zeichenebene liegen, werden durch zwei entsprechend angebrachte Ausnehmungen 13, 14 des Klappspiegels 4 definiert. Die Teilstrahlenbündel werden von den Ausnehmungen 13, 14 durchgelassen und treffen auf zwei kleine, am Klappspiegel 4 befestigte Umlenkspiegel 15, 16, von denen sie in eine Richtung parallel zur Ebene des Klappspiegels reflektiert werden. Im Strahlengang der umgelenkten Teilstrahlenbündel liegen zwei Umlenkprismen 17, 18, die zweckmässigerweise an der Unterseite des Klappspiegels 4 befestigt sind. In diesen werden die Teilstrahlenbündel so umgelenkt, dass die über die Teilpupillen P1, P2 erhaltenen Abbildungen des Gegenstandes, die sich sonst gegenseitig überlappen würden, voneinander getrennt werden. Zwei lineare Bildsensoren 19, 20 sind auf einem mit dem Klappspiegel 4 verbundenen Trägerkörper 21 vorgesehen. Sie sind so angeordnet, dass sich ihre Sensorelemente in einer gemeinsamen Sensorzeile befinden, die in Fig. 1 senkrecht zur Zeichenebene verläuft. Sie liegen weiterhin in einer zur Bildebene 6 äquivalenten Ebene 22, auf die der Gegenstand bei richtiger Einstellung des Objektivs 2 scharf abgebildet wird. Der Trägerkörper 21 besteht zweckmässigerweise aus einem dotierten Halbleitermaterial, z.B. Silizium, in das die einzelnen Sensorelemente integriert sind.

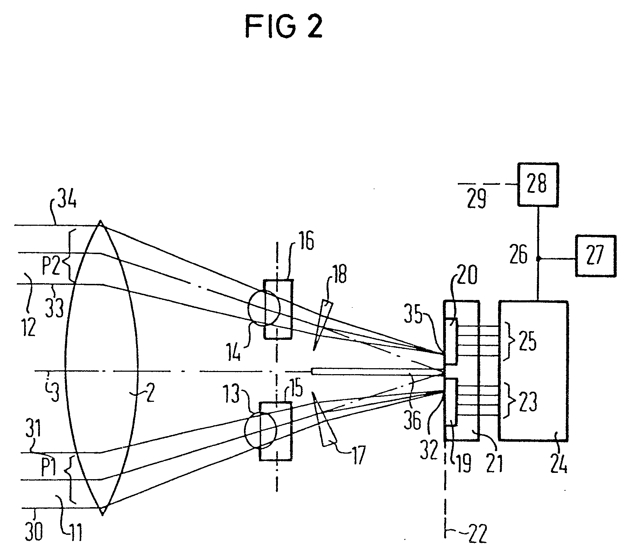

In Fig. 2 ist der eingeebnete Strahlengang der Teilstrahlenbündel 11 und 12 aus der Richtung der Suchereinstellscheibe 7 her gesehen dargestellt, wobei der Klappspiegel 4 weggelassen ist und die Umlenkung der Teilstrahlenbündel in den Umlenkspiegeln 15, 16 nicht berücksichtigt ist.

Jeder der Bildsensoren enthält eine Reihe von Sensorelementen, die jeweils aus Fotodioden, MIS-Kondensatoren oder aus Fotodioden und diesen zugeordneten MIS-Kondensatoren bestehen. Der Aufbau und die Arbeitsweise solcher Bildsensoren sind beispielsweise in der deutschen Patentanmeldung P 2 936 491.8 beschrieben. Die Ausgänge der Sensorelemente des Bildsensors 19 sind mit Paralleleingängen 23 einer Auswerteschaltung 24 verbunden, während die Ausgänge der Sensorelemente des Bildsensors 20 den Paralleleingängen 25 und 24 zugeführt sind. Ein Ausgang 26 der Auswerteschaltung ist mit einer die Entfernung des Gegenstandes anzeigenden Einrichtung 27 beschaltet. Andererseits kann der Ausgang 26 auch mit einer Fokussiereinrichtung 28 verbunden sein, die in Abhängigkeit von einem an 26 abgreifbaren Signal den zur Fokussierung benötigten Abstand des Objektivs 2 von der Bildebene 6 und den äquivalenten Ebenen 22 und 7 mittels eines durch die gestrichelte Linie 29 angedeuteten Betätigungsorgans einstellt. Die Auswerteschaltung 24 kann mit Vorteil in den dotierten Halbleiterkörper 21 integriert sein.

Zwei achsparallele Strahlen 30 und 31, die durch die Teilpupille P1 einfallen, treffen sich in einem Bildpunkt 32 der Ebene 22. Ebenso bilden sich achsparallele Strahlen 33 und 34, die durch P2 eintreten, in den Punkt 35 der Ebene 22 ab. Die Punkte 32 und 35 entsprechen dabei einem Gegenstandspunkt, der sich in einer sehr grossen Entfernung von der Kamera 1 befindet. Ist seine Entfernung geringer, so gehen von ihm Lichtstrahlen aus, die sich, soweit sie durch die Teilpupille P1 eintreten, in einem Punkt der Ebene 22 treffen, der um einen Abstand x in Fig. 2 unterhalb des Punktes 32 liegt. Andererseits treffen sich die Lichtstrahlen, die von ihm ausgehen und durch P2 einfallen, in einem Punkt der Ebene 22, der in Fig. 2 um einen Abstand y oberhalb des Punktes 35 liegt. Die Summe x + y ergibt nun ein Mass für die Entfernung des Gegenstandes von der Kamera 1. Betrachtet man die ganze mittels der Bildsensoren 19 und 20 abgetastete Zeile der aufzunehmenden Szene, so ist eine dem Wert x + y entsprechende relative Verschiebung zwischen miteinander vergleichbaren, die Bildsensoren beaufschlagenden Helligkeitsverteilungen vorhanden.

Der Wert der relativen Verschiebung x + y wird in der Auswerteschaltung 24 in der Weise ermittelt, dass die Sensorsignale des einen Bildsensors mit den Sensorsignalen des anderen Bildsensors in Abhängigkeit von unterschiedlichen Positionsverschiebungen hinsichtlich ihrer Korrelation überprüft werden. Die Positionsverschiebung, bei der die maximale Korrelation auftritt, entspricht dem gesuchten Wert x + y. Am Ausgang 26 ist eine elektrische Grösse abgeifbar, die diesem Wert und damit der Entfernung des Gegenstandes entspricht. Die Arbeitsweise einer solchen Auswerteschaltung ist beispielsweise in der DE-A-2 936 491 oder in den DE-A-2 813 913 und 2 813 914 beschrieben.

Insbesondere bei einer Verwendung der Fokussiereinrichtung 28 braucht das Objektiv 2 aber nicht vor jeder Entfernungsmessung oder Scharfeinstellung auf die Entfernung «Unendlich» eingestellt zu werden. Ausgehend von der jeweiligen Stellung des Objektivs stellt dann der Wert x + y ein Mass dar für die Abweichung der Entfernung des Gegenstandes von der Entfernung, auf die das Objektiv 2 gerade eingestellt ist. Die an 22 abgreifbare elektrische Grösse entspricht dabei der erforderlichen Objektivverstellung, mit der eine scharfe Abbildung des Gegenstandes erreicht wird.

Zur Trennung der über die Teilpupillen P1 und P2 erhaltenen Abbildungen dient vorteilhafterweise eine Blende 36, die an der Unterseite des Klappspiegels 4 befestigt ist.

## Patentansprüche

1. Fotografische oder elektronische Kamera, die als Spiegelreflexkamera mit einem den Strahlengang wahlweise in einen Sucher umlenkenden Klappspiegel (4) ausgebildet ist, bei der der Klappspiegel (4) zwei Ausnehmungen (13, 14) aufweist, die jeweils Teilpupillen (P1, P2) des Objektivs bestimmen, bei der durch diese Ausnehmungen Teilstrahlenbündel (11, 12) hindurchtreten und auf Umlenkspiegel (15, 16) fallen, die am Klappspiegel (4) angebracht sind, und bei der zwei Bildsensoren (19, 20) und eine Auswerteschaltung (24) vorgesehen sind, die in Abhängigkeit von gegenseitigen Abweichungen zweier durch die Teilstrahlenbündel (11, 12) auf die Bildsensoren (19, 20) projizierter Abbildungen eines Gegenstandes eine elektrische Grösse bildet, welche ein Mass für die Entfernung des Gegenstandes darstellt, dadurch gekennzeichnet, dass sowohl die Umlenkspiegel (15, 16) als auch die in einem dotierten Halbleiterkörper (21) integrierten Bildsensoren (19, 20) an dem Klappspiegel (4) starr befestigt sind, dass die Bildsensoren (19, 20) jeweils eine Mehrzahl von linear angeordneten Sensorelementen aufweisen, die auf Ausschnitte einander entsprechender Zeilen der Abbildungen ausgerichtet sind, und dass die Auswerteschaltung (24) mittels unterschiedlicher Positionsverschiebungen der von dem einen Bildsensor erhaltenen Sensorsignale gegenüber den von dem anderen Bildsensor erhaltenen Sensorsignalen die maximale Korrelation zwischen diesen und die zugeordnete Positionsverschiebung feststellt und eine von dieser abhängige elektrische Grösse bildet.

2. Fotografische oder elektronische Kamera nach Anspruch 1, dadurch gekennzeichnet, dass die Auswerteschaltung (24) in den dotierten Halbleiterkörper (21) integriert ist.

3. Fotografische oder elektronische Kamera nach einem der vorhergehenden Ansprüche, dadurch gekennzeichnet, dass der Auswerteschaltung (24) eine die Entfernung des Gegenstandes anzeigende Einrichtung (27) nachgeschaltet ist.

4. Fotografische oder elektronische Kamera nach einem der vorhergehenden Ansprüche, dadurch gekennzeichnet, dass der Auswerteschaltung (24) eine Fokussiereinrichtung (28) nachgeschaltet ist.

5. Fotografische oder elektronische Kamera nach einem der vorhergehenden Ansprüche, dadurch gekennzeichnet, dass zwischen den Bildsensoren (19, 20) eine die Teilstrahlenbündel (11, 12) voneinander trennende Blende (36) angeordnet ist.

## Revendications

1. Caméra photographique ou électronique qui est réalisée sous la forme d'une caméra réflex à miroir avec un miroir basculant (4) déviant au choix la trajectoire des rayons dans un viseur, du type dans lequel le miroir basculant (4) comporte deux ouvertures de passage (13, 14) qui déterminent respectivement une pupille partielle (P1, P2) de l'objectif, dans laquelle des faisceaux de rayons partiels (11, 12) passent par ces ouvertures et tombent sur des miroirs de déviation (15, 16) montés sur le miroir basculant, et dans laquelle sont prévus deux détecteurs d'images (19, 20) et un circuit d'évaluation (24) qui forment, en fonction des écarts relatifs entre deux images d'un objet projetées sur les détecteurs d'images (19, 20) par les faisceaux de rayons partiels (11, 12), une grandeur électrique qui représente une mesure de la distance de l'objet, caractérisée par le fait que les miroirs de déviation (15, 16) ainsi que les détecteurs d'images (19, 20) intégrés dans un corps semiconducteur (21), sont fixés rigidement sur le miroir basculant (4), que chacun des détecteurs d'images (19, 20) comporte plusieurs éléments détecteurs disposés linéairement, dirigés sur des sections de lignes des reproductions qui se correspondent, et que le circuit d'évaluation (24) détermine, à l'aide de différents décalages de positions des signaux de détection reçus par l'un des détecteurs d'images par rapport aux signaux de détection reçus par l'autre détecteur d'images, la corrélation maximale entre ces signaux et le décalage de position associé, et forme une grandeur électrique en fonction de cette dernière.

2. Caméra photographique ou électronique selon la revendication 1, caractérisée par le fait que le circuit d'évaluation (24) est intégré dans le corps semiconducteur dopé (21).

3. Caméra photographique ou électronique selon l'une des revendications précédentes, caractérisée par le fait qu'en aval du circuit d'évaluation (24) est monté un dispositif (27) qui indique la distance de l'objet.

4. Caméra photographique ou électronique selon l'une des revendications précédentes, caractérisée par le fait qu'en aval du circuit d'évaluation (24) est prévu un dispositif de mise au point (28).

5. Caméra photographique ou électronique selon l'une des revendications précédentes, caractérisée par le fait qu'entre les détecteurs d'images (19, 20) est disposé un diaphragme (36) qui sépare entre eux les faisceaux de rayons partiels (11, 12).

## Claims

1. A photographic or electronic camera designed as a reflex camera having a folding mirror (4) which alternatively deflects the light path to a viewfinder, wherein the folding mirror (4) has two recesses (13, 14) which respectively determine partial pupils (P1, P2) of the objective, wherein partial beams (11, 12) pass through the recesses and fall on deflecting mirrors (15, 16) secured to the folding mirror (4), and wherein are provided two image sensors (19, 20) and an evaluating circuit (24) which forms an electrical magnitude which constitutes a measure for the distance of the object, in dependence upon mutual deviations of two representations of an object projected onto the image sensors (19, 20) by means of the partial beams (11, 12), characterised in that both the deflecting mirrors (15, 16) and the image sensors (19, 20), which are integrated into a doped semiconductor body (21), are rigidly secured to the folding mirror (4), that the image sensors (19, 20) respectively have a plurality of linearly arranged sensor elements aligned to portions of mutually corresponding lines of the representations, and that by means of different position displacements of the sensor signals received by the one image sensor, relative to the sensor signals received by the other image sensor, the evaluating circuit (24) determines the maximal correlation between the latter and the assigned position displacement and forms an electrical magnitude dependent thereof.

2. A photographic or electronic camera as claimed in Claim 1, characterised in that the evaluating circuit (24) is integrated in the doped semiconductor bodies (21).

3. A photographic or electronic camera as claimed in one of the preceding Claims, characterised in that the evaluating circuit (24) is followed by a device (27) which displays the distance of the object.

4. A photographic or electronic camera as claimed in one of the preceding Claims, characterised in that the evaluating circuit (24) is followed by a focussing device (28).

5. A photographic or electronic camera as claimed in one of the preceding Claims, characterised in that a diaphragm (36) is arranged between the image sensors (19, 20) to separate the partial beams (11, 12) from one another.

FIG 1

2/2

FIG 2